(19) Europäisches Patentamt / European Patent Office / Office européen des brevets

(11) **EP 2 105 200 B1**

(12) **EUROPEAN PATENT SPECIFICATION**

(45) Date of publication and mention
of the grant of the patent:
**24.02.2016 Bulletin 2016/08**

(51) Int Cl.:
*B01D 53/94* $^{(2006.01)}$     *F01N 3/022* $^{(2006.01)}$
*F01N 3/035* $^{(2006.01)}$     *F01N 3/023* $^{(2006.01)}$

(21) Application number: **09250723.5**

(22) Date of filing: **13.03.2009**

(54) **CATALYST-CARRYING FILTER**

KATALYSATOR BESCHICHTETER FILTER

FILTRE REVÊTU AVEC UN CATALYSEUR

(84) Designated Contracting States:
**DE FR**

(30) Priority: **25.03.2008   JP 2008078476**

(43) Date of publication of application:
**30.09.2009   Bulletin 2009/40**

(73) Proprietor: **NGK Insulators, Ltd.**
**Nagoya-city, Aichi 467-8530 (JP)**

(72) Inventor: **Mizutani, Takashi**
**Nagoya City**
**Aichi-ken 467-8530 (US)**

(74) Representative: **Naylor, Matthew John et al**
**Mewburn Ellis LLP**
**City Tower**
**40 Basinghall Street**
**London EC2V 5DE (GB)**

(56) References cited:
**EP-A- 1 992 394          WO-A-2005/014146**
**WO-A-2005/084806     DE-A1-102004 040 548**
**JP-A- 2002 309 921     JP-A- 2003 210 922**
**US-A1- 2004 191 133**

**Description**

BACKGROUND OF THE INVENTION

Field of the Invention

The present invention relates to a catalyst-carrying filter that is used to collect or purify particulate matter contained in exhaust gas discharged from an internal combustion engine (e.g., diesel engine) or a combustion apparatus.

Description of Related Art

Exhaust gas discharged from an internal combustion engine (e.g., diesel engine) or a combustion apparatus (hereinafter may be collectively referred to as "internal combustion engine or the like") contains a large amount of particulate matter (hereinafter may be referred to as "PM") that mainly contains soot (graphite). When particulate matter is directly discharged to the atmosphere, environmental pollution occurs. Therefore, a filter that collects particulate matter is generally provided in an exhaust gas passage connected to an internal combustion engine or the like.

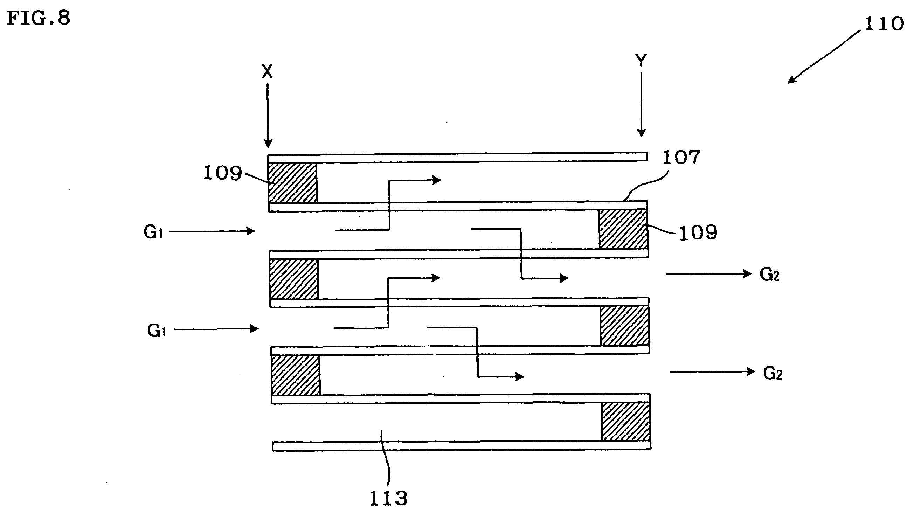

For example, a honeycomb filter shown in FIG 8 is used for such a purpose. The honeycomb filter includes a honeycomb structure 110 that has a plurality of cells 113 (exhaust gas passages) partitioned by a partition wall 107 formed of a porous ceramic having a number of pores, one open end X and the other open end Y of the cells 113 being alternately plugged by plugging sections 109. According to this honeycomb filter, when exhaust gas $G_1$ has flowed into the exhaust-gas-inflow cells, particulate matter contained in the exhaust gas $G_1$ is collected by the partition wall 107 when the exhaust gas $G_1$ passes through the partition wall 107, and purified gas $G_2$ from which particulate matter has been removed flows out from the purified-gas-outflow cells.

In recent years, a honeycomb filter that carries an oxidizing catalyst for promoting oxidation (combustion) of particulate matter (hereinafter may be referred to as "catalyst-carrying filter") has been used. In such a catalyst-carrying filter, an oxidizing catalyst is supported on the surface of the partition wall of the honeycomb filter and the inner surface of the pores formed in the partition wall. According to such a catalyst-carrying filter, since particulate matter contained in exhaust gas is collected by the partition wall and oxidation (combustion) of particulate matter is promoted, the amount of particulate matter contained in exhaust gas can be reduced. Therefore, exhaust gas can be effectively purified.

However, when using a catalyst-carrying filter formed of a porous ceramic having an average pore size that ensures that particulate matter contained in exhaust gas can be reliably collected, most of particulate matter contained in exhaust gas is deposited on the surface of the partition wall that faces the exhaust-gas-inflow cell, and does not reach the inside of the pores formed in the partition wall. Specifically, since the oxidizing catalyst supported on the inner surface of the pore formed in the partition wall does not come in contact with particulate matter, the oxidizing catalyst is not effectively utilized. Therefore, since oxidation (combustion) of particulate matter cannot be promoted sufficiently, the amount of particulate matter contained in exhaust gas cannot be reduced. As a result, particulate matter is deposited on the surface of the partition wall that faces the exhaust-gas-inflow cell within a relatively short time. In particular, when a DPF formed of such a catalyst-carrying filter is installed under the vehicle floor, since soot discharged from the engine aggregates (i.e., increases in diameter) before reaching the DPF, soot is deposited in the gas-inflow-side layer so that a pressure loss is likely to occur. Therefore, the filter must be frequently regenerated (i.e., a process that removes deposited particulate matter by back washing, heating, or the like).

An exhaust gas purification device wherein the average pore size of the pores formed in the partition wall is larger on the exhaust-gas-inflow side than the purified-gas-outflow side has been proposed as a catalyst-carrying honeycomb filter having a basic configuration similar to the above-mentioned configuration (see JP-A-2002-309921).

According to this exhaust gas purification device, since the average pore size of the pores formed in the partition wall is large on the exhaust-gas-inflow side, particulate matter contained in exhaust gas easily enters the partition wall through the exhaust-gas-inflow-side surface of the partition wall and reaches the inside of the pores formed in the partition wall. Moreover, since the average pore size of the pores formed in the partition wall is small on the purified-gas-outflow side, particulate matter does not flow out to the purified-gas-outflow-side cells. Therefore, particulate matter contained in exhaust gas can be efficiently collected. Moreover, since particulate matter efficiently comes in contact with an oxidizing catalyst supported inside the pores formed in the partition wall, oxidation (combustion) of particulate matter can be sufficiently promoted.

The above exhaust gas purification device is configured on the assumption that the pores are formed in the partition wall as a barrel space in which the pore size gradually decreases from the center in the thickness direction of the partition wall toward each side of the partition wall. One side of the partition wall is removed by a surface modifier so that the average pore size of the pores formed in the partition wall is larger on the exhaust-gas-inflow side than the purified-gas-outflow side. Specifically, the pore size of the pore is changed so that the pore size of one opening is larger than that of the other opening.

However, since the pores in the partition wall formed of a porous ceramic are formed by the space between aggregate particles bonded through sintering, it is considered that the pores are not formed as a barrel space disclosed in JP-A-2002-309921. Therefore, it is substantially difficult to employ the configuration of the exhaust gas purification device disclosed in JP-A-2002-309921. Specifically, even if an oxidizing catalyst is supported in the pores formed in the partition wall, the effects of the exhaust gas purification device disclosed in JP-A-2002-309921 cannot be obtained.

JP-T-2002-519186 discloses measures aimed at solving the above-described problems.

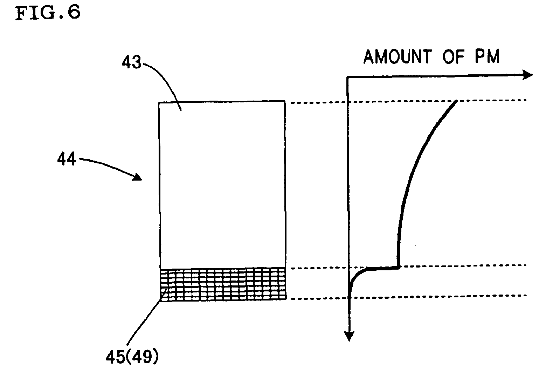

JP-T-2002-519186 discloses a method that increases the soot combustion rate by increasing the pore size of a gas-inflow-side soot deposition layer so that soot is deposited in the pores and efficiently comes in contact with a catalyst. However, when the catalyst is also applied to a collection layer formed in the gas-outflow-side layer, the average pore size of the collection layer at gas-outflow-side is reduced to a large extent so that the pores tend to be clogged by the catalyst. Moreover, the pressure loss due to soot deposition increases. Since a large amount of catalyst cannot be applied to the entire DPF in order to prevent clogging due to the catalyst, the soot combustion rate in the gas-inflow-side soot deposition layer is insufficient. Since the catalyst is uniformly applied to the entire partition wall, when the collection layer is formed in the large-pore-size layer (pore size: 30 $\mu$m or more) in the gas-inflow-side layer of the partition wall and the gas-outflow-side layer of the partition wall, the contact frequency between PM and the catalyst increases (see FIG. 6 that schematically shows the relationship between the partition wall and the PM deposition amount) so that the regeneration temperature decreases to a large extent. As a result, carbon is removed in an incomplete combustion state so that generation of CO cannot be suppressed.

In particular, when the DPF is installed under the vehicle floor, soot aggregates (i.e., the particle diameter of soot increases) before reaching the DPF. Therefore, most of the soot is deposited in the pores formed in the gas-inflow-side layer of the partition wall so that the above-described problems occur significantly.

Specifically, the above-mentioned documents do not disclose satisfactory measures against the above-described problems.

US 2004/0191133 shows a catalyst-carrying honeycomb filter useful as a DPF, which is described as having a fine coating layer on the surface of the partition wall on the side of the purified gas outflow cell. The coating layer has an average pore diameter smaller than that of the porous ceramic constituting the partition wall, and may have an average pore diameter in the range 5 to 50 $\mu$m. There is also an oxidation catalyst, which may be on the partition walls of the gas outflow cells as well as on the partition walls of the inflow cells.

SUMMARY OF THE INVENTION

The present invention was conceived in view of the above-described problems. An object of the present invention is to provide a catalyst-carrying filter that exhibits an improved catalyst purification performance, an improved regeneration efficiency, a reduced pressure loss due to soot, and an improved emission by forming a PM removal catalyst layer that supports or is coated with an oxidizing catalyst for promoting oxidation of particulate matter contained in exhaust gas in an gas-inflow-side layer (soot deposition layer) of a partition wall and forming a PM collection layer that has a small average pore size so as to collect particulate matter, and a gas purification catalyst layer that supports a gas purification catalyst that promotes oxidation of unburnt gas in a gas-outflow-side layer of the partition wall.

In particular, an object of the present invention is to provide a catalyst-carrying filter that allows the entire DPF to be coated with a large amount of catalyst while preventing clogging in the gas-inflow-side layer, allows the soot combustion rate in the gas-inflow-side layer to be increased, allows the regeneration temperature in the gas-inflow-side layer to be controlled by controlling the contact frequency of PM and a catalyst, and allows the gas-outflow-side layer to reliably suppress generation of CO as a result of reliable removal of carbon due to combustion in the gas-inflow-side layer by increasing the amount of catalyst supported in the gas-outflow-side layer as compared with the amount of catalyst supported in the gas-inflow-side layer.

According to the present invention, there is provided a catalyst-carrying filter as set out in claim 1. Preferably the PM removal catalyst layer supports the same oxidizing catalyst as that of the gas purification catalyst layer

Preferably the PM removal catalyst layer does not contain a noble metal.

Preferably an amount of Ce contained in the PM removal catalyst layer is larger than that of the gas purification catalyst layer by a factor of 1.2 to 20.

Preferably the gas purification catalyst layer has an average pore size smaller than that of the PM removal catalyst layer.

Preferably the gas purification catalyst layer has an average pore size of 1 to 15 $\mu$m.

Preferably the PM removal catalyst layer has an average pore size of 35 to 80 $\mu$m.

The catalyst-canying filter according to the present invention exhibits an improved catalyst purification performance, an improved regeneration efficiency, a reduced pressure loss due to soot, and an improved emission by forming the PM removal catalyst layer that supports or is coated with the oxidizing catalyst for promoting oxidation of particulate matter contained in exhaust gas in the gas-inflow-side layer (soot deposition layer) of the partition wall and forming the PM collection layer that has a small average pore size so as to collect particulate matter, and the gas purification catalyst layer that supports the gas purification catalyst that promotes oxidation of unburnt gas in the gas-outflow-side layer of the partition wall. The catalyst-carrying filter can efficiently remove PM and unburnt gas even when installed under the vehicle floor.

Moreover, the catalyst-carrying filter according to the present invention allows the entire DPF to be coated with a large amount of catalyst while preventing clogging in the gas-inflow-side layer, allows the soot combustion rate in the gas-inflow-side layer to be increased, allows the regeneration temperature in the gas-inflow-side layer to be controlled by controlling the contact frequency of PM and a catalyst, and allows the gas-outflow-side layer to reliably suppress generation of CO as a result of reliable removal of carbon due to combustion in the gas-inflow-side layer by increasing the amount of catalyst supported in the gas-outflow-side layer as compared with the amount of catalyst supported in the gas-inflow-side layer. The catalyst-carrying filter can be installed at an arbitrary position from an engine.

BRIEF DESCRIPTION OF THE DRAWINGS

FIG 1 is a schematic view (plan view) showing a ceramic filter to which one embodiment of the present invention is applied.
FIG 2 is a schematic view (perspective view) showing a ceramic filter to which one embodiment of the present invention is applied.
FIG 3 is a schematic view (cross-sectional view) showing a ceramic filter to which one embodiment of the present invention is applied.
FIG 4 is an enlarged view schematically showing a partition wall indicated by symbol P in FIG. 3 (i.e., an example of the cross section of the partition wall).
FIG 5 is a schematic view (cross-sectional view) showing a ceramic filter to which one embodiment of the present invention is applied.
FIG 6 is a view schematically showing the relationship between the partition wall and the PM deposition amount when a large-pore-size layer (pore size: 30 µm or more) is formed in the gas-inflow-side layer of the partition wall and a collection layer is formed in the gas-outflow-side layer of the partition wall.
FIG 7 is a schematic view illustrative of a specimen used for permeability measurement.
FIG. 8 is a schematic view (partly enlarged cross-sectional view) showing a related-art ceramic filter.
FIG. 9 is a schematic view (perspective view) showing a ceramic filter to which one embodiment of the present invention is applied.

DESCRIPTION OF PREFERRED EMBODIMENTS

Preferred embodiments of the ceramic filter according to the present invention are described in detail below. Note that the present invention is not limited to the following embodiments.

[1] Catalyst-carrying filter

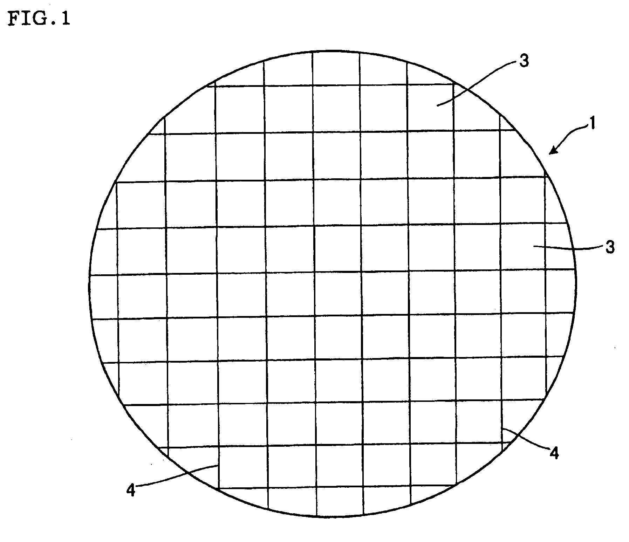

As shown in FIGS. 1 to 5, a catalyst-carrying filter 1 according to the present invention includes a honeycomb-structured base material having a plurality of cells 3 that serve as exhaust gas passages and are partitioned by a partition wall 4 formed of a porous ceramic having a number of pores, the partition wall including a gas-inflow-side layer 13 and a gas-outflow-side layer 15, one open end 7 (7a) and the other open end 7 (7b) of the plurality of cells 3 being alternately plugged by plugging sections 8, the gas-inflow-side layer 13 of the partition wall including a PM removal catalyst layer 10 that supports or is coated with an oxidizing catalyst for promoting oxidation of particulate matter contained in exhaust gas, and the gas-outflow-side layer 15 of the partition wall including a PM collection layer 9 that has a small average pore size so as to collect particulate matter, and a gas purification catalyst layer 11 that supports or is coated with a gas purification catalyst that promotes oxidation of unburnt gas.

[1-1] PM removal catalyst layer

The PM removal catalyst layer is formed by causing the partition wall to support (be coated with) an oxidizing catalyst (i.e., PM removal catalyst). The PM removal catalyst layer is formed in the gas-inflow-side layer of the partition wall of the honeycomb-structured base material. Specifically, the PM removal catalyst layer is formed in the gas-inflow-side layer of the partition wall (i.e., the surface of the partition wall and the inner wall of the pore formed in the partition wall near the gas inflow side) and oxidizes PM.

The PM removal catalyst layer is formed in this manner for the following reason. Specifically, when the DPF in which the gas-inflow-side layer of the partition wall has a large pore size and the gas-outflow-side layer of the partition wall has a small pore size is installed under the vehicle floor, soot aggregates (i.e., the particle diameter of soot increases) before reaching the DPF. Therefore, most of the soot is deposited in the pores formed in the gas-inflow-side layer of the partition wall. Therefore, PM and unburnt gas can be efficiently removed by coating the gas-inflow-side layer with the PM removal catalyst and coating the gas-outflow-side layer with the gas purification catalyst. Specifically, since the PM catalyst layer is formed in the gas-inflow-side layer as a layer that removes PM and the gas-outflow-side layer is formed as a layer that achieves two functions (i.e., the PM collection layer that collects PM and the gas purification catalyst layer that purifies unburnt gas), the gas-inflow-side layer and the gas-outflow-side layer can promote the catalyst purification process in a synergistic manner. As a result, the regeneration efficiency of the catalyst-carrying filter can be significantly improved.

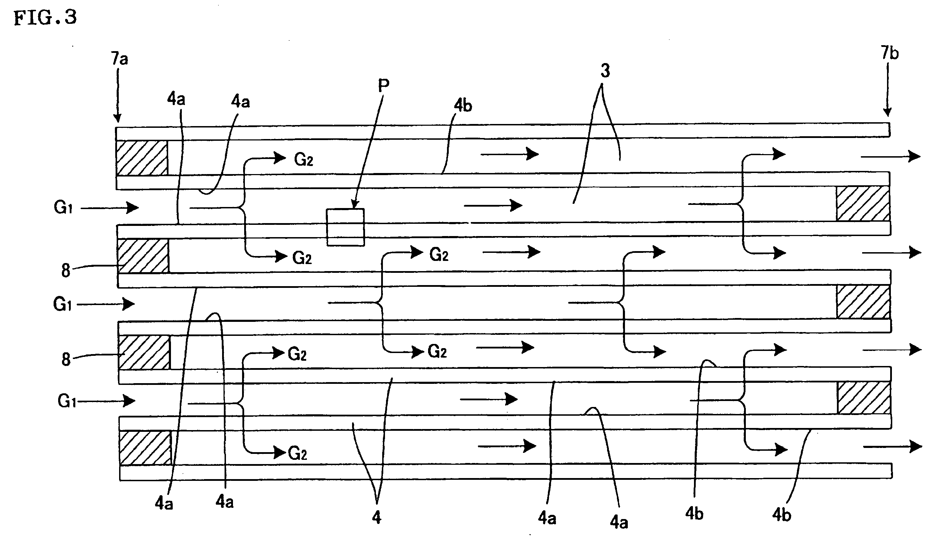

Note that the term "gas-inflow-side layer (gas-inflow-side area)" refers to an area that corresponds to the gas-inflow-side partition wall of the honeycomb-structured base material and is formed in the gas-inflow-side and nearby partition wall. Specifically, the gas-inflow-side layer 13 refers to a gas-inflow-side and nearby area of the partition wall 4, as shown in FIGS. 3 to 5. The gas-inflow-side layer supports (is coated with) the PM removal catalyst and serves as the PM removal catalyst layer 13. The term "gas-outflow-side layer (gas-outflow-side area)" refers to an area (PM collection layer 9) that corresponds to the gas-outflow-side partition wall of the honeycomb-structured base material and is formed in the gas-outflow-side and nearby partition wall, as shown in FIGS. 3 to 5. The gas-outflow-side layer is formed to have a small average pore size so as to collect particulate matter. Specifically, the term "gas-outflow-side layer" refers to a gas-outflow-side and nearby area of the partition wall 4. The gas-outflow-side layer supports (is coated with) the gas purification catalyst and serves as the gas purification catalyst layer 11.

Note that the structure of the partition wall of the base material is not limited to the two-layer structure that includes the gas-inflow-side layer and the gas-outflow-side layer. A partition wall that includes three or more layers may be formed by providing an intermediate layer that does not support a catalyst between the gas-inflow-side layer (gas-inflow-side area) and the gas-outflow-side layer (gas-outflow-side area).

[1-1-1] Oxidizing catalyst

The oxidizing catalyst is supported in (applied to) the gas-inflow-side layer of the partition wall (i.e., the surface of the partition wall and the inner wall of the pore formed in the partition wall near the gas inflow side) to form the PM removal catalyst layer. The PM removal catalyst (i.e., oxidizing catalyst) comes in contact with PM in the PM removal catalyst layer to promote oxidation of PM contained in exhaust gas.

As the oxidizing catalyst, a noble metal such as platinum (Pt), palladium (Pd), or rhodium (Rh) is suitably used.

In the catalyst-carrying filter according to the present invention, it is necessary that at least the oxidizing catalyst be supported in the PM removal catalyst layer. Note that other catalysts and a purification material may be further supported in the PM removal catalyst layer. For example, a NOx adsorber catalyst (e.g., alkali metal (e.g., Li, Na, K, or Cs) or alkaline earth metal (e.g., Ca, Ba, or Sr)), a three-way catalyst, a promoter such as cerium (Ce) oxide and/or zirconium (Zr) oxide, a hydrocarbon (HC) adsorbent, and the like may be supported. Note that these materials may be supported in the gas purification catalyst layer.

For example, the PM removal catalyst may include Ce and at least one rare earth metal, alkaline earth metal, or transition metal.

The rare earth metal may be selected from Sm, Gd, Nd, Y, Zr, Ca, La, Pr, and the like.

The alkaline earth metal included in the PM removal catalyst may be selected from Mg, Ca, Sr, Ba, and the like.

The transition metal included in the PM removal catalyst may be selected from Mn, Fe, Co, Ni, Cu, Zn, Sc, Ti, V, Cr, and the like.

The method of causing the partition wall of the honeycomb structure to support the catalyst component such as the oxidizing catalyst or the NOx adsorber catalyst is not particularly limited. For example, the partition wall of the honeycomb structure may be wash-coated with a catalyst solution containing the catalyst component, and then heated to a high temperature so that the catalyst component is secured on the gas purification catalyst layer. Alternatively, a ceramic slurry may be caused to adhere to the gas-inflow-side layer of the partition wall of the honeycomb-structured base material using a known ceramic film formation method (e.g., dipping), dried, and fired to form a thin PM removal catalyst layer. The average pore size of the gas-inflow-side layer (PM removal catalyst layer) may be adjusted to the desired value by controlling the grain size and the mixing ratio of aggregate particles in the ceramic slurry, for example. The porosity of the gas-inflow-side layer (PM removal catalyst layer) may be adjusted to the desired value by controlling the grain size of aggregate particles in the ceramic slurry and the amount of pore-forming material, for example. The thickness of the coating layer may be adjusted to the desired value by controlling the concentration of the ceramic slurry and the film formation time, for example. Note that a PM removal catalyst layer is not limited to "sole layer." A PM removal catalyst layer formed of two or more layers may be formed.

It is preferable that the catalyst component such as the oxidizing catalyst or the NOx adsorber catalyst be supported on a heat-resistant inorganic oxide having a large specific surface area (e.g., alumina) in advance, and then supported on the partition wall of the honeycomb structure so that the catalyst component is supported in a highly dispersed state.

The PM removal catalyst layer may be formed by causing a catalyst slurry to be supported inside the pores formed in the PM collection layer by applying a known catalyst supporting method (e.g., attraction method), and then drying and firing the catalyst slurry, for example.

[1-2] PM collection layer

In the catalyst-carrying filter according to this embodiment, the gas-outflow-side layer of the partition wall includes the PM collection layer that has a small average pore size so as to collect particulate matter (PM) that is contained in exhaust gas and mainly contains soot (graphite). Ashes can reliably be collected by reducing the average pore size of the gas-outflow-side layer of the partition wall. Moreover, a situation in which ashes enter the gas purification catalyst layer formed by causing the PM collection layer to be coated with (support) the gas purification catalyst can be prevented so that oxidation of unburnt gas can be promoted.

The average pore size of the gas-outflow-side layer of the partition wall is reduced for the following reason. Specifically, even if soot that cannot be purified by the PM removal catalyst layer reaches the collection layer, soot can be reliably collected by the collection layer so that soot does not enter the inside of the partition wall (i.e., deposited on the upper side of the collection layer). Therefore, unburnt gas can be reliably purified by the entire gas purification catalyst layer.

[1-3] Gas purification catalyst and gas purification catalyst layer

The gas purification catalyst layer according to this embodiment is a layer that includes a gas purification catalyst and is formed by causing the gas-outflow-side and nearby partition wall (gas-outflow-side layer) to support (be coated with) the gas purification catalyst. Specifically, in this embodiment, the PM collection layer and the gas purification catalyst layer are formed in the gas-outflow-side layer. However, since PM and ashes are deposited on the surface layer or the nearby area of the gas-outflow-side layer, PM and ashes do not enter the gas-outflow-side layer. Therefore, a deterioration in the catalyst in the gas-outflow-side layer can be prevented so that oxidation of unburnt gas in the gas purification catalyst layer can be promoted.

The term "(exhaust) gas purification catalyst" used herein refers to a catalyst component that has a function of purifying exhaust gas, and encompasses any catalyst that promotes purification of a hazardous component (e.g., nitrogen oxide, hydrocarbon, or carbon monoxide) contained in exhaust gas. For example, the term "(exhaust) gas purification catalyst" encompasses an oxidizing catalyst that catalyzes oxidation of nitrogen oxide (NOx), a three-way catalyst that catalyzes oxidation of nitrogen oxide and reduction of hydrocarbons and carbon monoxide at the same time, and a NOx adsorber catalyst.

When causing the partition wall to support (be coated with) the oxidizing catalyst as the gas purification catalyst, the gas purification catalyst layer is formed in the gas-outflow-side layer of the partition wall as a layer that promotes oxidation of unburnt gas contained in exhaust gas. The total amount of catalyst coating used to maintain an equal purification performance during use (hereinafter may be referred to as "total catalyst coating amount") is reduced by causing the partition wall to support the oxidizing catalyst as the gas purification catalyst. Since ashes are collected by the surface layer or the upper layer of the PM collection layer, ashes do not enter the gas-outflow-side layer (PM collection layer and gas purification catalyst layer). Therefore, a deterioration in the catalyst in the gas purification catalyst layer can be prevented while reducing the total catalyst coating amount.

The term "gas-outflow-side layer (gas-outflow-side area)" refers to an area that corresponds to the gas-outflow-side partition wall of the honeycomb-structured base material and is formed in the gas-outflow-side and nearby partition wall. The term "gas-outflow-side layer" refers to the gas-outflow-side area and nearby area of the partition wall 4 (see reference numeral 15) shown in FIGS. 3 to 5.

As the oxidizing catalyst used as the gas purification catalyst, a noble metal such as platinum (Pt), palladium (Pd), or rhodium (Rh) is suitably used.

When the oxidizing catalyst is supported on the catalyst-carrying filter according to the present invention as the gas purification catalyst, other catalysts and a purification material may be further supported on the catalyst-carrying filter. For example, a NOx adsorber catalyst (e.g., alkali metal (e.g., Li, Na, K, or Cs) or alkaline earth metal (e.g., Ca, Ba, or Sr)), a three-way catalyst, a promoter such as cerium (Ce) oxide and/or zirconium (Zr) oxide, a hydrocarbon (HC) adsorbent, and the like may be supported in the gas purification catalyst layer.

The method of causing the partition wall of the honeycomb structure to support the catalyst component such as the oxidizing catalyst or the NOx adsorber catalyst is not particularly limited. For example, the partition wall of the honeycomb structure may be wash-coated with a catalyst solution containing the catalyst component, and then heated to a high temperature so that the catalyst component is secured on the gas purification catalyst layer. It is preferable that the catalyst component such as the oxidizing catalyst or the NOx adsorber catalyst be supported on a heat-resistant inorganic oxide having a large specific surface area (e.g., alumina) in advance, and then supported on the partition wall of the honeycomb structure so that the catalyst component is supported in a highly dispersed state.

When the gas purification catalyst is the NOx purification catalyst (or mainly includes the NOx purification catalyst), the gas purification catalyst layer according to this embodiment is formed in the gas-outflow-side layer of the partition wall as a layer that purifies NOx. Specifically, the gas purification catalyst is supported on the gas-outflow-side and nearby partition wall (gas-outflow-side layer) to form a gas purification catalyst layer. When the NOx purification catalyst is supported (coated) as the gas purification catalyst to form the gas purification catalyst layer, generation of CO can be suppressed, and the NOx purification efficiency can be increased. Specifically, ashes and sulfur that enters the PM collection layer in the gas-outflow-side layer of the partition wall are reliably collected by the PM collection layer (particularly the surface layer and the upper layer of the PM collection layer) so that the inflow of ashes and sulfur into the gas purification catalyst layer formed in the same layer as the PM collection layer can be prevented. Therefore, only unburnt gas that has entered the gas purification catalyst layer can be purified and generation of CO can be suppressed while suppressing a deterioration in the NOx catalyst. Therefore, the regeneration (oxidation) efficiency can be improved.

The NOx purification catalyst may include a metal oxide selected from the group consisting of alumina, zirconia, titanium, and combinations thereof as a coating material.

Examples of the NOx purification catalyst include NOx adsorber-reduction catalysts and NOx selective reduction catalysts.

The term "NOx adsorber-reduction catalyst" refers to a catalyst that occludes NOx when the air/fuel ratio is in a lean state, and reduces the occluded NOx to $N_2$ during a rich spike at given intervals (i.e., when exhaust gas is made fuel-rich). For example, the NOx adsorber-reduction catalyst may be obtained by causing a metal oxide (e.g., alumina, zirconia, or titania) coating material to support a noble metal (e.g., platinum, palladium, or rhodium) and at least one metal selected from the group consisting of alkali metals and alkaline earth metals.

The term "NOx selective reduction catalyst" refers to a catalyst that causes NOx to selectively react with a reduction component in a lean atmosphere to purify NOx. For example, the NOx selective reduction catalyst may be obtained by causing a coating material that contains zeolite or alumina to support at least one metal selected from the group consisting of copper, cobalt, nickel, iron, gallium, lanthanum, cerium, zinc, titanium, calcium, barium, and silver.

The method of causing the partition wall of the honeycomb structure to support the purification catalyst is not particularly limited. For example, the partition wall of the honeycomb structure may be wash-coated with a catalyst solution containing the catalyst component, and then heated at a high temperature so that the catalyst component is secured on the partition wall. Alternatively, a ceramic slurry may be caused to adhere to the gas-outflow-side layer of the partition wall of the honeycomb-structured base material using a known ceramic film formation method (e.g., dipping), and then dried and fired to form a thin purification catalyst layer. The average pore size of the gas purification catalyst layer may be adjusted to the desired value by controlling the grain size and the mixing ratio of aggregate particles in the ceramic slurry, for example. The porosity of the gas purification catalyst layer may be adjusted to the desired value by controlling the grain size of aggregate particles in the ceramic slurry and the amount of pore-forming material, for example. The thickness of the coating layer may be adjusted to the desired value by controlling the concentration of the ceramic slurry and the film formation time, for example. Note that a gas purification catalyst layer is not limited to "sole layer." A gas purification catalyst layer formed of two or more layers may be formed.

It is preferable that the catalyst component such as the three-way catalyst, the oxidizing catalyst, or the NOx adsorber catalyst be supported on a heat-resistant inorganic oxide having a large specific surface area (e.g., alumina) in advance, and then supported on the partition wall of the honeycomb structure so that the catalyst component is supported in a highly dispersed state.

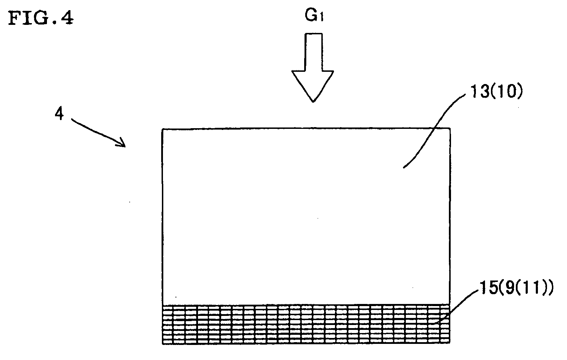

The details are described below with reference to FIGS. 3 to 5. The PM removal catalyst is supported on (applied to) the gas-inflow-side and nearby partition wall 4a (gas-inflow-side layer 13) to form the PM removal catalyst layer 10 as described above. The PM collection layer 9 having an average pore size smaller than that of the gas-inflow-side and nearby partition wall 4a is formed in the gas-outflow-side partition wall 4b (gas-outflow-side layer 15). The gas purification catalyst is supported in the PM collection layer 9 to form the gas purification catalyst layer 11. FIG. 3 is a schematic view showing the longitudinal cross section of the catalyst-carrying filter according to this embodiment, and FIG 4 is a view schematically showing the cross section of part of the partition wall of the catalyst-canying filter according to this embodiment.

[1-4] Relationship between PM removal catalyst layer and gas purification catalyst layer

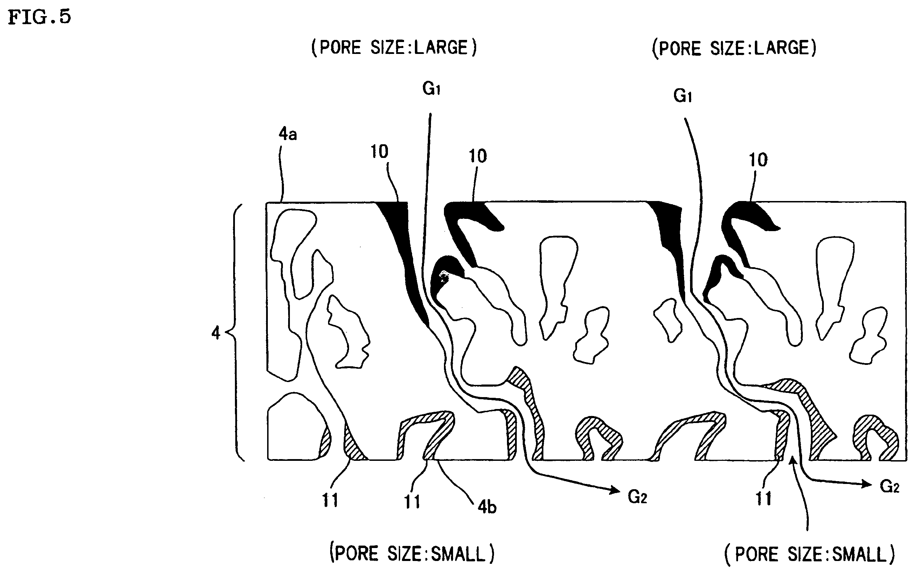

A state in which exhaust gas is purified by the gas-inflow-side layer (PM removal catalyst layer) and the gas-outflow-side layer (PM collection layer and gas purification catalyst layer) is described in detail below with reference to FIG 5. FIG. 5 is a schematic view (partly enlarged cross-sectional view) showing the ceramic filter according to the present invention.

As shown in FIG 5, the gas $G_1$ enters the cell, flows into the partition wall through the inflow-side partition wall 4a, and flows out through the outflow-side partition wall 4b. The inflow-side partition wall 4a (gas-inflow-side layer of partition wall) is coated with the PM removal catalyst layer 10, and the outflow-side partition wall 4b (gas-outflow-side layer of partition wall) is coated with the gas purification catalyst layer 11. Therefore, PM comes in contact with the PM removal catalyst in the gas-inflow-side partition wall so that PM can be purified (oxidized). Moreover, even if PM that has not come in contact with the PM removal catalyst in the PM removal catalyst layer (i.e., cannot be oxidized) and ashes that have been oxidized by the PM removal catalyst layer pass through the surface of the gas-outflow-side layer of the partition wall, since PM and ashes are collected by the gas-outflow-side layer (particularly the surface layer or the upper layer of the gas-outflow-side layer) as the PM collection layer, PM and ashes do not enter the gas purification catalyst layer so that a deterioration in the gas purification catalyst can be prevented. As a result, since only unburnt gas enters the gas purification catalyst layer, purification of unburnt gas can be promoted so that the regeneration efficiency can be improved. In particular, when the DPF in which the gas-inflow-side layer of the partition wall has a large pore size and the gas-outflow-side layer of the partition wall has a small pore size is installed under the vehicle floor, soot aggregates (i.e., the particle diameter of soot increases) when soot reaches the DPF. Therefore, most of soot is deposited in the pores formed in the gas-inflow-side layer of the partition wall. However, since the gas-inflow-side layer is coated with the PM removal catalyst and the gas-outflow-side layer is coated with the gas purification catalyst, PM and unburnt gas can be efficiently removed.

It is preferable that the PM removal catalyst layer support (be coated with) the PM removal catalyst in an amount larger than that of the gas purification catalyst layer. When the DPF in which the gas-inflow-side layer of the partition wall has a large pore size and the gas-outflow-side layer of the partition wall has a small pore size is installed under the vehicle floor, soot aggregates (i.e., the particle diameter of soot increases) when soot reaches the DPF. Therefore, most of soot is deposited in the pores formed in the gas-inflow-side layer of the partition wall. According to the above configuration, since the gas-inflow-side layer is coated with the PM removal catalyst and the gas-outflow-side layer is coated with the gas purification catalyst, PM and unburnt gas can be removed more efficiently. Specifically, since the PM catalyst layer is formed in the gas-inflow-side layer as a layer that removes PM and the gas-outflow-side layer is formed as a layer that achieves two functions (i.e., the PM collection layer that collects PM and the gas purification catalyst layer that purifies unburnt gas), the gas-inflow-side layer and the gas-outflow-side layer can promote the catalyst purification process in a synergistic manner. As a result, the regeneration efficiency of the catalyst-carrying filter can be significantly improved.

The PM removal catalyst layer supports (is coated with) the oxidizing catalyst in an amount larger than that of the gas purification catalyst layer. According to this configuration, PM can be reliably removed by the PM removal catalyst layer while suppressing the amount of catalyst used for the catalyst-carrying filter. Moreover, unburnt gas can be reliably oxidized by the gas purification catalyst layer. Specifically, if the amount of oxidizing catalyst is so small that PM is not sufficiently processed by the PM removal catalyst layer, the amount of PM that enters the gas purification catalyst layer may increase. As a result, the collection layer may become clogged. In this case, since the soot combustion rate in the gas-inflow-side soot deposition layer decreases, PM may frequently come in contact with the catalyst, or the regeneration temperature decreases to a large extent. As a result, carbon is removed in an incomplete combustion state so that generation of CO cannot be suppressed. Therefore, the regeneration efficiency decreases. If the amount of oxidizing catalyst supported in the PM removal catalyst layer is too large, cost may increase since the total amount of catalyst increases. Moreover, a decrease in strength of the entire filter (e.g., cracks during regeneration) may occur. If the amount of catalyst supported in the gas-inflow-side layer is increased without changing the total amount of catalyst, since the amount of catalyst supported in the gas-outflow-side layer decreases, unburnt gas may not be sufficiently purified by the gas-outflow-side layer. Therefore, it is preferable the total amount of catalyst supported on the entire catalyst-carrying filter be adjusted.

The oxidizing catalyst is supported in the PM removal catalyst layer in an amount larger than that of the gas purification catalyst layer by a factor of 1.05 to 10. If the amount of oxidizing catalyst supported in the PM removal catalyst layer is larger than that of the gas purification catalyst layer by a factor of more than 10, the amount of gas purification catalyst supported in the gas-outflow-side layer is too small. As a result, CO produced due to incomplete combustion during soot regeneration is not sufficiently oxidized in the gas-outflow-side layer (gas purification catalyst layer) so that the CO emission cannot be reduced (CO slippage may occur). Therefore, the PM removal catalyst layer and the gas purification catalyst layer are made to function sufficiently by adjusting the amount of oxidizing catalyst supported in the PM removal catalyst layer and the gas purification catalyst layer within the above desired range so that the regeneration efficiency can be improved. In particular, the effects of the present invention can then be achieved due to the characteristics of each catalyst layer.

When causing the oxidizing catalyst to be supported in the PM removal catalyst layer in an amount larger than that of the gas purification catalyst layer by a factor of 1.05 to 10, (1) the amount of oxidizing catalyst supported in the PM removal catalyst layer and the gas purification catalyst layer may be adjusted within the above desired range while increasing the total amount of catalyst, or (2) the amount of oxidizing catalyst supported in the PM removal catalyst layer and the gas purification catalyst layer may be adjusted within the above desired range without changing the total amount of catalyst. When adjusting the amount of oxidizing catalyst supported in the PM removal catalyst layer and the gas purification catalyst layer within the above desired range while increasing the total amount of catalyst, it is preferable to appropriately increase the total amount of catalyst since problems may occur if the total amount of catalyst is increased to a large extent. It is preferable to adjust the amount of oxidizing catalyst supported in the PM removal catalyst layer and the gas purification catalyst layer within the above desired range without changing the total amount of catalyst. In this case, an increase in cost and a decrease in strength of the entire filter (e.g., cracks during regeneration) can be prevented.

The total amount of oxidizing catalyst supported in (applied to) the PM removal catalyst layer and the gas purification catalyst layer is 15 to 180 g/l. If the total amount of oxidizing catalyst is less than 15 g/l, the regeneration efficiency may decrease. Moreover, since the amount of catalyst in the gas-outflow-side layer may become insufficient, the CO purification efficiency may not reach 100%. If the total amount of oxidizing catalyst is more than 180 g/l, the pores formed in the gas-inflow-side layer may be clogged by the catalyst so that a pressure loss due to soot may occur. If the amount of pressure loss due to soot increases, the performance during acceleration decreases to an impractical level during actual use.

The amount of noble metal included in the PM removal catalyst layer is smaller than that of the gas purification catalyst layer. Since a noble metal does not contribute to soot regeneration, the amount of noble metal can be reduced to reduce cost.

It is preferable that the PM removal catalyst layer does not include a noble metal. Since a noble metal does not contribute to soot regeneration, the amount of noble metal can be reduced to reduce cost.

It is preferable that Ce be added to the PM removal catalyst layer in an amount larger than that of the gas purification catalyst layer by a factor of 1.2 to 10 (i.e., ceria amount ratio=1.2 to 10). If the ceria amount ratio is less than 1.2, the regeneration efficiency may decrease. If the ceria amount ratio is more than 10, since the amount of oxygen adsorber catalyst in the gas-outflow-side layer decreases to a large extent, the amount of oxygen may be locally insufficient during CO oxidation so that the HC gas emission may become insufficient.

It is preferable that the gas purification catalyst layer have an average pore size smaller than that of the PM removal catalyst layer. However, it is preferable that the gas purification catalyst layer have an average pore size appropriate for purifying gas. Specifically, if the average pore size of the gas-outflow-side layer of the partition wall is too small, the upper part (ash inflow side or its nearby area) of the pores in the PM collection layer may be clogged by ashes when ashes are collected by the PM collection layer. On the other hand, if the average pore size of the gas-outflow-side layer of the partition wall is too large, it is difficult to cause the gas-outflow-side layer to support the gas purification catalyst. Even if the gas purification catalyst layer can be formed by causing the gas-outflow-side layer to support the gas purification catalyst, ashes may not sufficiently come in contact with the PM collection layer (or gas purification catalyst) and may be collected insufficiently and pass through the gas purification catalyst layer. As a result, gas may not be purified sufficiently. This may result in a decrease in catalyst purification performance.

As shown in FIGS. 3 to 5, it is preferable that the PM collection layer having an average pore size smaller than that of the gas-inflow-side and nearby partition wall be formed on the surface of the gas-outflow-side and nearby partition wall 4 that partitions the cells of the honeycomb structure, for example. In FIGS. 3 and 4, the pores and the oxidizing catalyst are omitted. The PM collection layer has an average pore size in the range 1 to 15 $\mu$m.

The average pore size of the gas purification catalyst layer is more preferably 1 to 15 $\mu$m. The desired permeability and PM emission can be easily achieved by setting the average pore size of the gas-outflow-side layer, which is not only a PM collection layer but also a gas purification catalyst layer at 1 to 15 $\mu$m. Specifically, if the average pore size is less than 1 $\mu$m, the permeability decreases so that the permeation resistance of the pores tends to increase rapidly. If the average pore size is more than 15 $\mu$m, the collection performance decreases so that the PM emission may exceed the Euro-5 regulation value. Therefore, the effects of the present invention can be achieved by adjusting the average pore size of the PM collection layer within the above desired range.

The term "permeability" used herein refers to a value calculated by the following expression (1). The term "permeability" refers to an index that indicates the passage resistance when a specific gas passes through a sample (partition wall). In the expression (1), C indicates the permeability ($m^2$), F indicates the gas flow rate ($cm^3$/s), T indicates the thickness (cm) of the sample, V indicates the gas viscosity (dynes·sec/$cm^2$), D indicates the diameter (cm) of the sample, and P indicates the gas pressure (PSI). In the expression (1), 13.839 PSI equals 1 atm, and 68947.6 dynes·sec/$cm^2$ equals 1 PSI.

$$C = \frac{8FTV}{\pi D^2 (P^2 - 13.839^2)/13.839 \times 68947.6} \times 10^{-4} \quad (1)$$

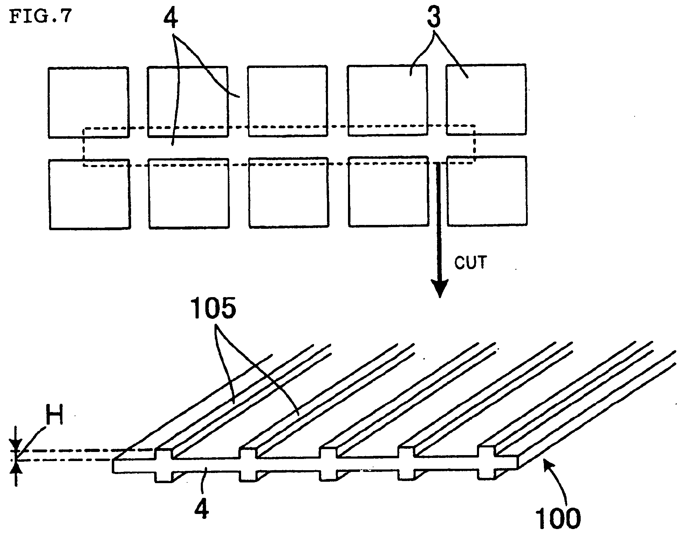

The permeability is calculated as follows. As shown in FIG 7, a honeycomb structure or a honeycomb-structured catalyst body is cut into a rectangular or disc-like specimen 100 so that the rib height H is 0.2 mm or less. The passage resistance when causing air at room temperature to pass through the partition wall 4 of specimen 100 is measured, and the permeability is calculated by the expression (1). It is desirable to use a fluid seal (e.g., grease) so that air does not leak through an opening between a rib 105 and a seal. The flow rate of air is adjusted so that air passes through the partition wall at a flow rate of 0.1 cm/sec or more and 1 cm/sec or less. In the honeycomb-structured catalyst body, the catalyst coating layer is provided on the cell inner wall and the rib in a different way. In the present invention, since a large amount of catalyst adheres to the inner surface of the pore in the partition wall (i.e., the effect of the rib is small), the permeability of the partition wall of the honeycomb-structured catalyst body can be measured in the same manner as the honeycomb structure.

The terms "average pore size" and "porosity" used herein respectively refer to the average pore size and the porosity measured by mercury porosimetry.

The average pore size of the PM removal catalyst layer is preferably 35 to 80 $\mu$m, and more preferably 40 to 80 $\mu$m. This ensures that PM is reliably purified. If the average pore size of the PM removal catalyst layer is too small, the upper part (gas inflow side or nearby area) of the pores in the PM removal catalyst layer may be clogged by soot. As a result, PM may not come in contact with the PM removal catalyst. If the average pore size of the PM removal catalyst layer is too large, it is difficult to cause the PM removal catalyst layer to support the PM removal catalyst. Even if the PM removal catalyst layer can be formed by causing the PM removal catalyst layer to support the PM removal catalyst, gas flows into and clogs the PM collection layer without coming in contact with the PM removal catalyst. Therefore, the process using the gas removal catalyst is hindered.

It is preferable that the PM removal catalyst layer have a porosity of 40 to 90%, and more preferably 50 to 80%. If the porosity of the PM removal catalyst layer is less than 40%, a pressure loss may increase. If the porosity of the PM removal catalyst layer is more than 90%, since the strength of the PM removal catalyst layer may become insufficient, the PM removal catalyst layer may be removed from the surface of the partition wall. If the porosity of the PM removal catalyst layer is less than 40%, since a large amount of particulate matter is deposited, filter regeneration becomes difficult.

When the porosity of the PM removal catalyst layer is higher than the porosity of the porous ceramic that forms the partition wall by 5% or more, a pressure loss (permeation pressure loss) in the PM removal catalyst layer can be reduced.

It is preferable that the gas purification catalyst layer have a porosity of 30 to 70%, and more preferably 35 to 60%. If the porosity of the gas purification catalyst layer is less than 30%, a pressure loss may increase. Moreover, PM may not sufficiently come in contact with the oxidizing catalyst in the PM removal catalyst layer formed in the gas inflow area of the cell. If the porosity of the gas purification catalyst layer is more than 70%, since the strength of the gas purification catalyst layer may become insufficient, the PM removal catalyst layer may be removed from the surface of the partition wall.

[1-5] Honeycomb structure

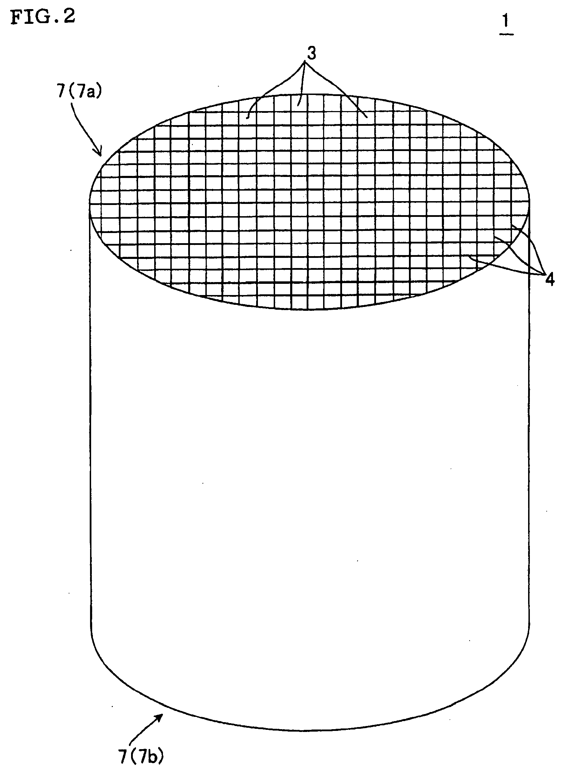

As shown in FIGS. 1 to 3, the honeycomb-structured base material according to this embodiment has a plurality of cells (exhaust gas passages) partitioned by the partition wall 4 formed of a porous ceramic having a number of pores. The honeycomb-structured base material is configured as a catalyst-carrying filter in which the partition wall 4 of the cells 3 includes the gas-inflow-side gas-inflow-side layer 13 and the gas-outflow-side gas-outflow-side layer 15. One open end 7a and the other open end 7b of the cells are alternately plugged by the plugging sections. Note that the overall shape of the honeycomb structure is not particularly limited. For example, the honeycomb structure may have a cylindrical shape (see FIGS. 1 and 2), a quadrangular prism shape, a triangular prism shape, or the like.

The shape of the cell of the honeycomb-structured base material (i.e., the shape of the cell in the cross section perpendicular to the cell formation direction) may be quadrilateral (see FIG 1), hexagonal, triangular, or the like. Note that the shape of the cell is not limited thereto, but may be an arbitrary known shape. The shape of the cell is preferably circular or polygonal having four or more sides. Specifically, since the catalyst is not concentrated on the corner in the cross section of the cell, the thickness of the catalyst layer can be made uniform. A hexagonal cell is particularly preferable taking account of the cell density, the open ratio, and the like.

The cell density of the honeycomb-structured base material is not particularly limited. When using the honeycomb-structured base material as the catalyst-carrying filter according to this embodiment, the cell density is preferably 6 to 1500 cells/in$^2$ (0.9 to 233 cells/cm$^2$). The thickness of the partition wall is preferably 20 to 2000 $\mu$m.

When using the honeycomb-structured base material as the catalyst-carrying filter according to this embodiment, it is preferable that one open end and the other open end of the cells of the honeycomb-structured base material be alternately plugged. As shown in FIG. 3, the honeycomb structure that has a plurality of cells 3 (exhaust gas passages) partitioned by the partition wall 4 formed of a porous ceramic having a number of pores is formed to have a structure in which one open end 7a and the other open end 7b of the cells 3 are alternately plugged by the plugging sections 8, for example. According to this honeycomb structure, when exhaust gas $G_1$ has flowed into the exhaust gas inflow cells 3 that open toward the exhaust-gas-inlet-side end face 7a, particulate matter contained in the exhaust gas $G_1$ is collected by the partition wall 4 when the exhaust gas $G_1$ passes through the partition wall 4, and purified gas $G_2$ from which particulate matter has been removed flows out from the purified gas outflow cells 3 that open toward the exhaust-gas-outlet-side end face 7b.

The material for the honeycomb-structured base material is not particularly limited. A ceramic may be suitably used as the material for the honeycomb-structured base material. It is preferable to use cordierite, silicon carbide, alumina, mullite, or silicon nitride from the viewpoint of strength, heat resistance, corrosion resistance, and the like.

The honeycomb-structured base material may be produced by mixing and kneading ceramic aggregate particles and water optionally with an organic binder (e.g., hydroxypropoxylmethyl cellulose or methyl cellulose), a pore-forming material (e.g., graphite, starch, or synthetic resin), a surfactant (e.g., ethylene glycol or fatty acid soap), and the like to prepare a clay, forming the clay to the desired shape, drying the formed clay to obtain a formed product, and firing the formed product, for example.

The honeycomb structure may be produced as follows. Note that the method of producing the honeycomb structure is not limited thereto. Any known method of producing the honeycomb structure can be used.

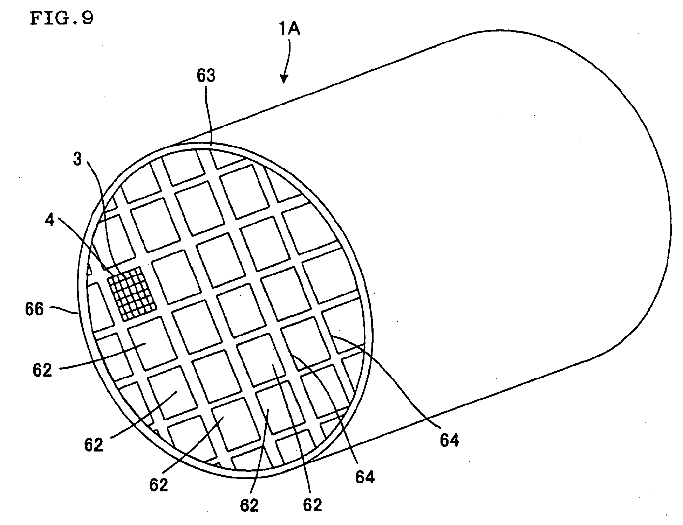

For example, when the honeycomb structure is a honeycomb segment bonded body 63 that includes a plurality of honeycomb segments 62 (see FIG 9), and is produced by bonding the honeycomb segments 62 through a bonding material 64 and cutting the outer surface to the desired shape, the honeycomb structure may be produced as follows.

The honeycomb segment is produced. Specifically, a SiC powder and a Si metal powder are mixed in a mass ratio of 80:20. After the addition of methyl cellulose, hydroxypropoxylmethyl cellulose, a surfactant, and water, the components are kneaded to obtain a plastic clay. The clay is extruded using a specific die to obtain a honeycomb segment formed body having the desired shape. The resulting honeycomb segment formed body is dried using a microwave dryer, completely dried using a hot-blast dryer, plugged, and calcined.

The honeycomb segment formed product is calcined for degreasing at 550°C for about three hours in an oxidizing atmosphere, for example. Note that the calcining conditions are preferably adjusted corresponding to the organic substance (e.g., organic binder, dispersant, and pore-forming material) in the honeycomb formed product. The combustion temperature of the organic binder is normally about 100 to 300°C, and the combustion temperature of the pore-forming material is normally about 200 to 800°C. Therefore, the calcining temperature may be set at about 200 to 1000°C. The calcining time is normally about 3 to 100 hours. However, it is not limited thereto.

The honeycomb segment formed product is then fired. The term "firing" refers to sintering the forming raw material contained in the calcined body to effect densification so that the resulting product has specific strength. The firing conditions (temperature and time) differ depending on the type of forming raw material. The firing conditions may be appropriately selected corresponding to the type of forming raw material. For example, when firing the honeycomb segment formed product in an inert atmosphere (argon), the firing temperature is generally set at about 1400 to 1500°C, for example. However, it is not limited thereto.

The PM collection layer is then formed on the gas-outflow-side wall (i.e., gas-outflow-side layer). The PM collection layer is formed by immersing the honeycomb segment in a slurry that contains a silicon carbide powder, and firing (firing for forming the PM collection layer) the honeycomb segment. The average particle diameter of the silicon carbide powder contained in the slurry is preferably 0.3 to 5 $\mu$m. The silicon carbide powder is preferably dispersed in a dispersion medium (e.g., organic polymeric material). The viscosity of the slurry is preferably adjusted to about 50,000 cp. The firing temperature is preferably about 1400 to 1500°C. The gas-inflow-side layer and the PM collection layer (gas-outflow-side layer) are formed in this manner. Each layer is coated with a catalyst in a catalyst supporting step described later.

A plurality of honeycomb segments (sintered bodies) having the desired dimensions are obtained by the above-mentioned steps. A bonding slurry prepared by mixing aluminosilicate fibers, colloidal silica, polyvinyl alcohol, and silicon carbide is applied to the periphery of each honeycomb segment. The honeycomb segments are then compression-bonded and dried with heating to obtain a honeycomb segment bonded body having a quadrangular prism shape. The honeycomb segment bonded body is ground to a cylindrical shape. The periphery of the resulting product is coated with a peripheral coating layer formed of the same material as the honeycomb segment formed body. The peripheral coating layer is then dried and cured to obtain a cylindrical honeycomb structure having a segmented structure.

The plugging section is formed as follows. Specifically, a plugging slurry is stored in a storage container. The end face of the honeycomb structure provided with a mask is immersed in the plugging slurry contained in the storage container so that the openings of the cells that are not provided with the mask are filled with the plugging slurry to form plugging sections. The other ends of the cells that are plugged on one end are masked and plugged in the same manner as described above to form plugging sections. As a result, the other ends of the cells are alternately plugged in a checkered pattern. The cells may be plugged after firing the honeycomb formed product to form a honeycomb fired body.

The same material as the raw material for the honeycomb segment is preferably used as the plugging material. In this case, since the plugging material and the honeycomb segment have the same expansion coefficient during firing, the durability of the honeycomb structure can be increased.

For example, when using cordierite as the material for the partition wall, a dispersion medium (e.g., water), a pore-forming material, an organic binder, and a dispersant are added to a cordierite-forming raw material. The mixture is kneaded to prepare clay. The clay may be prepared by kneading the cordierite-forming raw material (forming raw material) using a kneader, a vacuum kneader, or the like. The cordierite raw material is preferably fired at 1410 to 1440°C for about 3 to 10 hours.

The clay thus prepared may be extruded using a die having the desired cell shape, partition wall thickness, and cell density, for example.

A catalyst-carrying filter formed by causing such a honeycomb structure to support the catalyst may be suitably installed under the vehicle floor. The catalyst-carrying filter can efficiently remove PM and unburnt gas even when installed under the vehicle floor.

[2] First production method

In one method of producing the catalyst-carrying filter according to the present invention, the catalyst-carrying filter is preferably produced by separately coating the honeycomb structure with the PM removal catalyst and the gas purification catalyst. This facilitates the forming process so that uniform products can be obtained.

Specifically, a honeycomb structure (that has been bonded and processed) in which the PM collection layer is formed on the gas-outflow-side wall (gas-outflow-side layer) of the partition wall is provided.

A slurry of an oxidizing catalyst (PM removal catalyst applied to the gas-inflow-side layer of the partition wall of the honeycomb structure) and a slurry of a gas purification catalyst (applied to the gas-outflow-side layer of the partition wall of the honeycomb structure) are prepared. The outflow-side cells of the honeycomb structure (i.e., where the PM collection layer is applied) are immersed in the slurry of the purification catalyst to a specific depth. The slurry is absorbed through the inflow-side cells (i.e., where the PM collection layer is not applied) for a specific time while adjusting the absorption pressure and the absorption flow rate so that the gas purification catalyst is supported in the gas-outflow-side layer (PM collection layer). The honeycomb structure is then dried at 120°C for two hours, and the gas purification catalyst is secured on the honeycomb structure at 550°C for one hour. The inflow-side cells of the honeycomb structure are then immersed in the slurry of the PM removal catalyst to a specific depth. The slurry is absorbed through the outflow-side cells for a specific time while adjusting the absorption pressure and the absorption flow rate so that the PM removal catalyst is supported in the gas-inflow-side layer. The honeycomb structure is then dried at 120°C for two hours, and the PM removal catalyst is secured on the honeycomb structure at 550°C for one hour. A catalyst-carrying filter is thus obtained.

An example in which (1) the gas purification catalyst is supported, dried, and secured, and the PM removal catalyst is then supported, dried, and secured has been described above. Note that the catalyst supporting method is not limited thereto. For example, (2) the gas purification catalyst may be supported and dried, the PM removal catalyst may then be supported and dried, and the catalysts may then be secured (see the second production method described later). Alternatively, (3) the gas purification catalyst may be supported, the PM removal catalyst may then be supported, and the catalysts may then be dried and secured. The drying conditions and the firing conditions are the same as described above.

The gas purification catalyst and the PM removal catalyst may be applied in the reverse order. Specifically, the gas purification catalyst may be supported after causing the PM removal catalyst to be supported.

In this method of producing the catalyst-carrying filter, the honeycomb structure is separately coated with the PM removal catalyst and the gas purification catalyst. Note that the method of coating the honeycomb structure with the PM removal catalyst and the gas purification catalyst is not limited thereto. A known method may also be used. For example, a dipping method, an absorption method, or the like may be used.

The catalyst composition may be alumina:platinum:ceria material=7:1:2. The ceria material may have a composition of Ce:Zr:Pr:Y:Mn=60:20:10:5:5.

[2-2] Second production method

In a second method of producing the catalyst-carrying filter, the catalyst-carrying filter is more preferably produced by coating the honeycomb structure with the PM removal catalyst through the inlet side, and coating the honeycomb structure with the gas purification catalyst through the outlet side. According to this production method, the PM removal catalyst can be reliably supported in the gas-inflow-side layer, and the gas purification catalyst can be reliably supported in the gas-outflow-side layer. Therefore, a variation in products can be minimized.

The second production method is described in detail below. The second production method differs from the first production method as to only the method of causing the catalyst to be supported on the honeycomb structure. Therefore, the following description focuses on the method of causing the catalyst to be supported on the honeycomb structure. The remaining production steps are omitted as much as possible. Regarding the remaining production steps, refer to the first production method and the method of producing the honeycomb structure described above.

In the second production method, a honeycomb structure (that has been bonded and processed) in which the PM collection layer is formed in the gas-outflow-side layer of the partition wall is provided in the same manner as in the first production method. A slurry of an oxidizing catalyst (PM removal catalyst) and a slurry of a gas purification catalyst are prepared. The catalyst composition may be the same as that used in the first production method.

The outflow-side cells of the honeycomb structure (i.e., where the PM collection layer is applied) are immersed in the slurry of the purification catalyst to a specific depth. The slurry is absorbed through the inflow-side cells (i.e., where the PM collection layer is not applied) for a specific time while adjusting the absorption pressure and the absorption flow rate so that the gas purification catalyst is supported in the gas-outflow-side layer. The honeycomb structure is then dried at 120°C for two hours. The inflow-side cells of the honeycomb structure are then immersed in the slurry of the PM removal catalyst to a specific depth. The slurry is absorbed through the outflow-side cells for a specific time while adjusting the absorption pressure and the absorption flow rate so that the PM removal catalyst is supported in the gas-inflow-side layer. The honeycomb structure is then dried at 120°C for two hours, and the PM removal catalyst is secured on the honeycomb structure at 550°C for one hour. A catalyst-carrying filter is thus obtained.

EXAMPLES

The following Examples and Comparative Examples are not within the scope of the present invention. The Examples are thus reference examples. In the reference examples and comparative examples, "part" and "%" respectively refer to "part by mass" and "mass%" unless otherwise indicated. In the reference examples and comparative examples, properties were evaluated and measured by the following methods.

[1] DPF

In the reference examples and comparative examples, a catalyst-carrying filter was produced using a honeycomb structure described below.

A honeycomb structure (i.e., base material of catalyst-carrying filter) was produced as follows. A mixed powder of 80 mass% of an SiC powder and 20 mass% of an Si metal powder was used as the raw material. Methyl cellulose, hydroxypropoxylmethyl cellulose, a surfactant, and water were added to the mixed powder to prepare a plastic clay. The clay was extruded using an extruder to obtain sixteen (4x4) honeycomb segments having the desired dimensions. The honeycomb segments were dried using microwaves and a hot blast, plugged on either end of the cells in a checkered pattern, and calcined (for degreasing) at 550°C for three hours in an oxidizing atmosphere. The honeycomb segments were fired at 1400°C for two hours in an inert atmosphere (argon) to obtain a plurality of honeycomb segments (sintered bodies) in which SiC crystal particles are bonded through Si. A collection layer was formed on the gas-outflow-side partition wall of the honeycomb segment (sintered body). The honeycomb segment was fired at 1400°C for two hours to obtain a honeycomb segment in which a collection layer having a thickness of 50 μm was formed. A bonding slurry was applied to the periphery of each honeycomb segment. The honeycomb segments were compression-bonded and dried with heating to obtain a honeycomb segment bonded body in the shape of a quadrangular prism. The honeycomb segment bonded body was ground to a cylindrical shape. The periphery of the resulting product was coated with a peripheral coating layer formed of the same material as the bonding slurry. The peripheral coating layer was dried and cured to obtain a honeycomb structure (144×152 mm, 12 mil/300 cpsi).

[2] Catalyst

An oxidizing catalyst was used. The partition wall of the above-mentioned SiC-DPF was wash-coated with a catalyst solution containing an oxidizing catalyst component at the desired location and amount corresponding to Examples 1 to 13 and Comparative Examples 1 to 10 described later, and heated at a high temperature to obtain a catalyst-carrying filter.

The composition of a catalyst A was alumina:platinum:ceria material=7:1:2 (ceria material had a composition of Ce:Zr:Pr:Y:Mn=60:20:10:5:5). A catalyst B (B-1 to B-5) and a catalyst C (C-1 to C-5) were prepared so that the ceria amount ratio differed from that of the catalyst A (the total catalytic amount was identical with that of the catalyst A) (see Table 1). A catalyst D (D-1 to D-3) and a catalyst E (E-1 to E-3) were prepared so that the platinum ratio differed from that of the catalyst A (the total catalytic amount was identical with that of the catalyst A) (see Table 1). The details are shown in Examples 1 to 13 and Comparative Examples 1 to 10.

The catalyst was supported in the gas purification layer by absorbing the catalyst slurry from the outlet-side end face. The catalyst was supported in the PM collection layer by absorbing the catalyst slurry from the inlet-side end face. The honeycomb structure was then dried at 120°C for two hours, and the catalyst was secured on the honeycomb structure at 550°C for one hour.

(Examples 1 to 6)

Catalyst-carrying filters of Examples 1 to 6 were obtained from the SiC-DPF described above in the same manner as described above, except for setting the porosity of the gas-inflow-side layer at 60%, setting the pore size of the gas-inflow-side layer at 50 $\mu$m, setting the porosity of the gas-outflow-side layer at 40%, setting the pore size of the gas-outflow-side layer at 5 $\mu$m, causing the catalyst A to be supported (applied) as the PM removal catalyst, and causing the catalyst A to be supported (applied) as the gas purification catalyst. The catalyst amount ratio, the total catalyst amount, and the like are shown in Table 1.

(Examples 7 and 8)

Catalyst-carrying filters of Examples 7 and 8 were obtained form the SiC-DPF described above in the same manner as described above, except for setting the porosity of the gas-inflow-side layer at 60%, setting the pore size of the gas-inflow-side layer at 50 $\mu$m, setting the porosity of the gas-outflow-side layer at 40%, and setting the pore size of the gas-outflow-side layer at 1 $\mu$m, or setting the porosity of the gas-inflow-side layer at 60%, setting the pore size of the gas-inflow-side layer at 50 $\mu$m, setting the porosity of the gas-outflow-side layer at 40%, and setting the pore size of the gas-outflow-side layer at 15 $\mu$m, causing the catalyst A to be supported (applied) as the PM removal catalyst, and causing the catalyst A to be supported (applied) as the gas purification catalyst. The catalyst amount ratio, the total catalyst amount, and the like are shown in Table 1.

(Examples 9 to 13)

A catalyst-carrying filter of Example 9 was obtained from the SiC-DPF described above in the same manner as described above, except for setting the porosity of the gas-inflow-side layer at 60%, setting the pore size of the gas-inflow-side layer at 50 $\mu$m, setting the porosity of the gas-outflow-side layer at 40%, setting the pore size of the gas-outflow-side layer at 5 $\mu$m, causing the catalyst B-2 to be supported (applied) as the PM removal catalyst, and causing the catalyst C-2 to be supported (applied) as the gas purification catalyst. A catalyst-carrying filter of Example 10 was obtained in the same manner as described above, except for causing the catalyst B-3 to be supported (applied) as the PM removal catalyst, and causing the catalyst C-3 to be supported (applied) as the gas purification catalyst. A catalyst-carrying filter of Example 11 was obtained in the same manner as described above, except for causing the catalyst B-4 to be supported (applied) as the PM removal catalyst, and causing the catalyst C-4 to be supported (applied) as the gas purification catalyst. A catalyst-carrying filter of Example 12 was obtained in the same manner as described above, except for causing the catalyst D-1 to be supported (applied) as the PM removal catalyst, and causing the catalyst E-1 to be supported (applied) as the gas purification catalyst. A catalyst-carrying filter of Example 13 was obtained in the same manner as described above, except for causing the catalyst D-2 to be supported (applied) as the PM removal catalyst, and causing the catalyst E-2 to be supported (applied) as the gas purification catalyst. The catalyst amount ratio between the PM removal catalyst and the gas purification catalyst, the total catalyst amount, and the Ce and Pt amount ratios between the PM removal catalyst and the gas purification catalyst are shown in Table 1.

(Comparative Examples 1 to 5)

Catalyst-carrying filters of Comparative Examples 1 to 5 were obtained from the SiC-DPF described above in the same manner as described above, except for setting the porosity of the gas-inflow-side layer at 60%, setting the pore size of the gas-inflow-side layer at 50 $\mu$m, setting the porosity of the gas-outflow-side layer at 40%, setting the pore size of the gas-outflow-side layer at 5 $\mu$m, causing the catalyst A to be supported (applied) as the PM removal catalyst, and causing the catalyst A to be supported (applied) as the gas purification catalyst. The catalyst amount ratio, the total catalyst amount, and the like are shown in Table 1.

(Comparative Examples 6 and 7)

Catalyst-carrying filters of Comparative Examples 6 and 7 were obtained from the SiC-DPF described above in the same manner as described above, except for setting the porosity of the gas-inflow-side layer at 60%, setting the pore size of the gas-inflow-side layer at 50 $\mu$m, setting the porosity of the gas-outflow-side layer at 40%, and setting the pore size of the gas-outflow-side layer at 0.5 $\mu$m, or setting the porosity of the gas-inflow-side layer at 60%, setting the pore size of the gas-inflow-side layer at 50 $\mu$m, setting the porosity of the gas-outflow-side layer at 40%, and setting the pore size of the gas-outflow-side layer at 17 $\mu$m, causing the catalyst A to be supported (applied) as the PM removal catalyst, and causing the catalyst A to be supported (applied) as the gas purification catalyst. The catalyst amount ratio, the total catalyst amount, and the like are shown in Table 1.

(Comparative Examples 8 to 10)

A catalyst-carrying filter of Comparative Example 8 was obtained from the SiC-DPF described above in the same manner as described above, except for setting the porosity of the gas-inflow-side layer at 60%, setting the pore size of the gas-inflow-side layer at 50 $\mu$m, setting the porosity of the gas-outflow-side layer at 40%, setting the pore size of the gas-outflow-side layer at 5 $\mu$m, causing the catalyst B-1 to be supported (applied) as the PM removal catalyst, and causing the catalyst C-1 to be supported (applied) as the gas purification catalyst. A catalyst-carrying filter of Comparative Example 9 was obtained in the same manner as described above, except for causing the catalyst B-5 to be supported (applied) as the PM removal catalyst, and causing the catalyst C-5 to be supported (applied) as the gas purification catalyst, and a catalyst-carrying filter of Comparative Example 10 was obtained in the same manner as described above, except for causing the catalyst D-3 to be supported (applied) as the PM removal catalyst, and causing the catalyst E-3 to be supported (applied) as the gas purification catalyst. The catalyst amount ratio, the total catalyst amount, and the like are shown in Table 1.

The following experiments were conducted using the catalyst-carrying filters of Examples 1 to 13 and Comparative Examples 1 to 10 thus obtained.

[1] Regeneration efficiency test

The catalyst-coated DPF was connected to a diesel engine (2.0 liter). 8 g/l of PM was deposited on the DPF at 2000 rpm×50 Nm. The exhaust gas temperature was increased by post injection, and the DPF inlet gas temperature was controlled at 650°C for 10 minutes. After stopping post injection, the DPF was removed. The amount of PM deposited on the DPF was then measured, and the regeneration efficiency (PM combustion efficiency) was calculated from the weight measured before and after the test.

[2] Pressure loss due to soot

The pressure loss across the DPF when 8 g/l of PM was deposited was measured, and the pressure loss when 6 g/l of PM was deposited was evaluated.

[3] Gas emission

The CO purification efficiency across the DPF was measured during regeneration (post injection).

[4] PM emission

The DPF was installed in a vehicle equipped with a diesel engine (2.0 liter), and an emission test was conducted in accordance with the European regulation mode. The PM emission was measured to evaluate the collection performance of the DPF.

[5] Measuring method

The catalyst distributions of the catalyst-coated DPFs of the examples and comparative examples were observed using a scanning electron microscope (SEM). The chemical components were quantitatively analyzed by energy dispersive X-ray spectroscopy (EDX). The integrated value of the catalyst components at each measurement position was taken as the amount of catalyst supported at each measurement position. Specifically, the catalyst distribution was observed at an SEM magnification of 1000. Then, the chemical components were observed by EDX. The chemical components were analyzed by EDX. The catalyst components were then quantitatively analyzed by EDX. The specimens were sampled from the catalyst-coated DPFs of Examples 1 to 13 and Comparative Examples 1 to 10 at about 30 mm from the inlet and the outlet (the gas-inflow side and the gas-outflow-side in the DPF axial direction) and the center in the axial direction. The specimens were sampled at the center in the cross section. The amount of catalyst was measured at the center in the direction of the thickness of the gas-inflow-side layer, on the gas-inflow side (about 50 μm from the interface between the PM collection layer and the gas-outflow-side layer) in the direction of the thickness of the gas-outflow-side layer, and about 50 μm from the interface between the intermediate layer and the gas-outflow-side layer. The average value of the values measured at these three locations was taken as the amount of catalyst in each layer.

The experimental results are shown in Table 1. Examples 1 to 13 are not within the scope of the invention.

TABLE 1

| No. | Gas-inflow-side layer | | Gas-outflow-side layer | | PM re-moval catalyst | Gas purifica-tion catalyst | Catalyst amount ratio (-) | Total catalyst amount (g/l) | Ceria amount ratio (-) | Pt amount ratio (-) | Regmeration efficiency (-) | Pressure loss due to soot (kPa) | Gas emis-sion (%) | PM emis-sion (mg/km) |
|---|---|---|---|---|---|---|---|---|---|---|---|---|---|---|
| | Porosity (%) | Pore size (μm) | Porosity (%) | Pore size (μm) | | | | | | | | | | |
| Comparative Example 1 | 60 | 50 | 40 | 5 | A | A | 1 | 30 | - | - | 44 | 11 | 100 | 1.0 |
| Comparative Example 2 | 60 | 50 | 40 | 5 | A | A | 1.05 | 30 | - | - | 46 | 12 | 100 | 1.0 |
| Example 1 | 60 | 50 | 40 | 5 | A | A | 1.1 | 30 | - | - | 52 | 10 | 100 | 1.0 |
| Example 2 | 60 | 50 | 40 | 5 | A | A | 2 | 30 | - | - | 55 | 13 | 100 | 1.0 |
| Example 3 | 60 | 50 | 40 | 5 | A | A | 10 | 30 | - | - | 62 | 15 | ioo | 1.0 |
| Comparative Example 3 | 60 | 50 | 40 | 5 | A | A | 11 | 30 | - | - | 63 | 16 | 92 | 1.0 |
| Comparative Example 4 | 60 | 50 | 40 | 5 | A | A | 2 | 13 | - | - | 42 | 8 | 90 | 1.0 |
| Example 4 | 60 | 50 | 40 | 5 | A | A | 2 | 15 | - | - | 53 | 9 | 100 | 1.0 |
| Example 5 | 60 | 50 | 40 | 5 | A | A | 2 | 40 | - | - | 64 | 15 | 100 | 1.0 |
| Example 6 | 60 | 50 | 40 | 5 | A | A | 2 | 170 | - | - | 72 | 24 | 100 | 1.0 |
| Comparative Example 5 | 60 | 50 | 40 | 5 | A | A | 2 | 200 | - | - | 63 | 33 | 100 | 1.0 |
| Comparative Example 6 | 60 | 50 | 40 | 0.5 | A | A | 2 | 30 | - | - | 53 | 38 | 100 | 0.1 |
| Example 7 | 60 | 50 | 40 | 1 | A | A | 2 | 30 | - | - | 52 | 12 | 100 | 0.3 |
| Example 8 | 60 | 50 | 40 | 15 | A | A | 2 | 30 | - | - | 53 | 13 | 100 | 4.1 |
| Comparative Example 7 | 60 | 50 | 40 | 17 | A | A | 2 | 30 | - | - | 54 | 11 | 100 | 6.2 |
| Comparative Example 8 | 60 | 50 | 40 | 5 | B-1 | C-1 | 1 | 30 | 1.1 | - | 45 | 13 | 100 | 1.0 |
| Example 9 | 60 | 50 | 40 | 5 | B-2 | C-2 | 1 | 30 | 1.2 | - | 53 | 12 | 100 | 1.0 |

| No. | Gas-inflow-side layer | | Gas-outflow-side layer | | PM re-moval catalyst | Gas purifica-tion catalyst | Catalyst amount ratio (-) | Total catalyst amount (g/l) | Ceria amount ratio (-) | Pt amount ratio (-) | Regmeration efficiency (-) | Pressure loss due to soot (kPa) | Gas emis-sion (%) | PM emis-sion (mg/km) |
|---|---|---|---|---|---|---|---|---|---|---|---|---|---|---|
| | Porosity (%) | Pore size (μm) | Porosity (%) | Pore size (μm) | | | | | | | | | | |
| Example 10 | 60 | 50 | 40 | 5 | B-3 | C-3 | 1 | 30 | 5 | - | 57 | 13 | 100 | 1.0 |
| Example 11 | 60 | 50 | 40 | 5 | B-4 | C-4 | 1 | 30 | 20 | - | 67 | 12 | 100 | 1.0 |
| Comparative Example 9 | 60 | 50 | 40 | 5 | B-5 | C-5 | 1 | 30 | 21 | - | 73 | 11 | 94 | 1.0 |
| Example 12 | 60 | 50 | 40 | 5 | D-1 | C-1 | 1 | 30 | - | 0 | 53 | 11 | 100 | 1.0 |
| Example 13 | 60 | 50 | 40 | 5 | D-2 | E-2 | 1 | 30 | - | 0.2 | 52 | 12 | 100 | 1.0 |
| Comparative Example 10 | 60 | 50 | 40 | 5 | D-3 | E-3 | 1 | 30 | - | 1.5 | 52 | 11 | 100 | 1.0 |

(Consideration 1)

The DPFs of Examples 1 to 3 are compared with the DPFs of Comparative Examples 1 to 3. The DPF of Example 1 having the two-layer structure showed an improved regeneration efficiency by changing the catalyst amount ratio from one (=identical catalyst density) to two. On the other hand, the regeneration efficiency decreased or the gas emission deteriorated to an impractical level in the comparative examples. When using the DPFs of Comparative Examples 1 and 2 in which the catalyst amount ratio was small (the amount of catalyst in the gas-inflow-side layer was small), the regeneration efficiency deteriorated since the amount of catalyst used to burn soot was insufficient. Therefore, since the DPFs of Comparative Examples 1 and 2 must be regenerated at reduced intervals when subjected to repeated regeneration, the DPF must be regenerated at a high frequency during actual use. This means that the fuel consumption significantly increases (i.e., impractical). When using the DPF of Comparative Example 3 in which the catalyst amount ratio was too large (the amount of catalyst in the gas-outflow-side layer was small), slippage of unburnt gas occurred during regeneration so that the gas emission deteriorated. On the other hand, since the DPFs of Examples 1 to 3 had an appropriate catalyst amount ratio, the amount of catalyst used to burn soot was sufficient so that the regeneration efficiency was improved. The DPFs of Examples I to 3 also achieved good gas emission results.
The term "catalyst amount ratio" used herein refers to the catalyst density ratio (hereinafter the same).

(Consideration 2)

The DPFs of Examples 4 to 6 are compared with the DPFs of Comparative Examples 4 and 5. In Comparative Example 4 in which the total catalyst amount was small, since the amount of catalyst in the gas-inflow-side layer was insufficient, the regeneration efficiency decreased. Moreover, since the amount of catalyst in the gas-outflow-side layer was insufficient, the gas emission deteriorated. In Comparative Example 5 in which the total catalyst amount was too large, the pores were clogged by the catalyst so that the pressure loss due to soot increased to a large extent. Moreover, since soot entered the pores to only a small extent, soot did not sufficiently come in contact with the catalyst so that the regeneration efficiency decreased. Specifically, since the regeneration efficiency did not decrease to a needed level of at least 50% even if the amount of catalyst was increased, the performance decreases in spite of an increase in cost (i.e., impractical). On the other hand, since the DPFs of Examples 4 to 6 had an appropriate total catalyst amount, the regeneration efficiency was improved. Moreover, the performance can be increased while suppressing the production cost.

(Consideration 3)

The DPFs of Examples 7 and 8 are compared with the DPFs of Comparative Examples 6 and 7. In Comparative Example 6, since the pore size of the gas-outflow-side layer was too small, the pressure loss increased to a large extent due to low permeability. In Comparative Example 7, since the pore size of the gas-outflow-side layer was too large, the collection efficiency decreased so that the PM emission deteriorated. Therefore, the DPFs of Comparative Examples 6 and 7 are impractical. On the other hand, since the DPFs of Examples 7 and 8 were formed so that the gas-outflow-side layer had an appropriate pore size, a good PM emission was achieved without showing an increase in pressure loss.

(Consideration 4)

The DPFs of Examples 9 to 11 are compared with the DPFs of Comparative Examples 8 and 9. In Examples 9 to 11, since the ceria amount ratio was increased, the regeneration efficiency could be increased even if the catalyst amount ratio was one. Thus, good results can be obtained. In Comparative Example 8, since the catalyst amount ratio was smaller than 1.2, the regeneration efficiency was insufficient. In Comparative Example 9, since the catalyst amount ratio was larger than 20, the amount of ceria in the gas-outflow-side layer was too small. As a result, the gas emission deteriorated.

(Consideration 5)

The DPFs of Examples 12 and 13 are compared with the DPF of Comparative Example 10. In Comparative Example 10, the regeneration efficiency did not change even if the amount of Pt in the gas-inflow-side layer was increased. The regeneration efficiency did not change even when the amount of Pt was zero (Example 12) or the Pt amount ratio was 0.2 (Example 13). This means that Pt does not contribute to soot combustion. As compared with Examples 12 and 13, the DPF of Comparative Example 10 increases cost due to the addition of Pt even though the regeneration efficiency is not improved.
The catalyst-carrying filter according to the present invention may be suitably used to collect or purify particulate matter contained in exhaust gas discharged from an internal combustion engine (e.g., diesel engine, ordinary vehicle engine, and large-size vehicle (e.g., truck and bus) engine) or a combustion apparatus.

Description of Reference Numerals

1, 1A: catalyst-carrying filter, 3, 113: cell, 4, 44, 107: partition wall, 4a: gas-inflow-side partition wall, 4b: gas-outflow-side partition wall, 7: open end, 7a: one open end, 7b: the other open end, 8, 109: plugging section, 9: PM collection layer, 10: PM removal catalyst layer, 11: gas purification catalyst layer, 13, 43: gas-inflow-side layer, 15, 45: gas-outflow-side layer, 49: collection layer, 62: honeycomb segment, 63: honeycomb segment bonded body, 64: bonding material, 66: outer surface coat layer, 100: specimen, 105: rib, 110: honeycomb filter, X: one end, Y: the other end, G: exhaust gas

**Claims**

1. A catalyst-carrying filter comprising a honeycomb-structured base material having a plurality of cells (3) that serve as exhaust gas passages and are partitioned by a partition wall (4) formed of a porous ceramic having a number of pores, the partition wall (4) including a gas-inflow-side layer (13) and a gas-outflow-side layer,
   one open end and the other open end of the plurality of cells being alternately plugged by plugging sections;
   the gas-inflow-side layer of the partition wall including a PM removal catalyst layer (10) that supports or is coated with an oxidizing catalyst for promoting oxidation of particulate matter contained in exhaust gas; and
   the gas-outflow-side layer (15) of the partition wall including a PM collection layer (9) that has an average pore size of 1 to 15 μm so as to collect particulate matter, and a gas purification catalyst layer (11) that supports or is coated with a gas purification catalyst that promotes oxidation of unburnt gas,
   wherein the amount (g/l) of the oxidizing catalyst supported in the PM removal catalyst layer is larger than that of the gas purification catalyst layer by a factor of 1.05 to 10,
   the amount of noble metal contained in the PM removal catalyst layer (10) is smaller than that of the gas purification catalyst layer (11), and
   the total amount of oxidizing catalyst supported in the PM removal catalyst layer (10) and the gas purification catalyst layer (11) is 15 to 180 g/l.

2. The catalyst-carrying filter according to claim 1, wherein the amount of Ce contained in the PM removal catalyst layer (10) is larger than that of the gas purification catalyst layer (11) by a factor of 1.2 to 20.

3. The catalyst-carrying filter according to any one of claims 1 and 2, wherein the PM removal catalyst layer (10) does not contain a noble metal.

4. The catalyst-carrying filter according to any one of claims 1 to 3, wherein the gas purification catalyst layer (11) has an average pore size smaller than that of the PM removal catalyst layer.

5. The catalyst-carrying filter according to any of claims 1 to 4, wherein the gas purification catalyst layer has an average pore size of 1 to 15 μm.

6. The catalyst-carrying filter according to any of claims 1 to 5, wherein the PM removal catalyst layer (10) has an average pore size of 35 to 80 μm.

**Patentansprüche**

1. Filter mit Katalysator, welcher ein wabenstrukturiertes Basismaterial umfasst, welches eine Vielzahl von Zellen (3) aufweist, die als Abgaskanäle fungieren und durch eine Trennwand (4) getrennt sind, welche aus einer porösen Keramik mit einer Reihe von Poren ausgebildet ist, wobei die Trennwand (4) eine Gaszustromseitenschicht (13) und eine Gasabstromseitenschicht umfasst,
   wobei ein offenes Ende und das andere offene Ende der Vielzahl von Zellen abwechselnd durch Verschlussabschnitte verschlossen sind;
   wobei die Gaszustromseitenschicht der Trennwand eine Feinstaubentfernungs-Katalysatorschicht (10) umfasst, die einen oxidierenden Katalysator enthält oder mit diesem beschichtet ist, um die Oxidation von im Abgas enthaltenem Feinstaub zu begünstigen; und

wobei die Gasabstromseitenschicht (15) der Trennwand eine Feinstaubsammelschicht (9), die eine mittlere Porengröße von 1 bis 15 μm aufweist, um Feinstaub zu sammeln, sowie eine Gasreinigungskatalysatorschicht (11) umfasst, die einen Gasreinigungskatalysator, der die Oxidation von nicht verbranntem Gas begünstigt, enthält oder mit diesem beschichtet ist,

worin der Gehalt (g/l) des oxidierenden Katalysators, welcher in der Feinstaubentfernungskatalysatorschicht enthalten ist, um einen Faktor von 1,05 bis 10 größer ist als der der Gasreinigungskatalysatorschicht, der Gehalt an Edelmetallen, die in der Feinstaubentfernungskatalysatorschicht (10) enthalten sind, geringer ist als der der Gasreinigungskatalysatorschicht (11) und der Gesamtgehalt des oxidierenden Katalysators, der in der Feinstaubentfernungskatalysatorschicht (10) und der Gasreinigungskatalysatorschicht (11) enthalten ist, 15 bis 180 g/l ist.

2. Filter mit Katalysator nach Anspruch 1, worin der Gehalt von Ce, welcher in der Feinstaubentfernungs-Katalysatorschicht (10) enthalten ist, um einen Faktor von 1,2 bis 20 größer ist als der der Gasreinigungskatalysatorschicht (11).

3. Filter mit Katalysator gemäß einem der Ansprüche 1 und 2, worin die Feinstaubentfernungs-Katalysatorschicht (10) kein Edelmetall enthält.

4. Filter mit Katalysator nach einem der Ansprüche 1 bis 3, worin die Gasreinigungskatalysatorschicht (11) eine durchschnittliche Porengröße aufweist, die geringer ist als die der Feinstaubentfernungs-Katalysatorschicht.

5. Filter mit Katalysator nach einem der Ansprüche 1 bis 4, worin die Gasreinigungskatalysatorschicht eine durchschnittliche Porengröße von 1 bis 15 μm aufweist.

6. Filter mit Katalysator nach einem der Ansprüche 1 bis 5, worin die Feinstaubentfernungs-Katalysatorschicht (10) eine durchschnittliche Porengröße von 35 bis 80 μm aufweist.

**Revendications**

1. Filtre supportant un catalyseur comprenant un matériau de base à structure en nid d'abeilles comportant une pluralité de cellules (3) qui servent de passages de gaz d'échappement et qui sont séparées par une paroi de séparation (4) constituée d'une céramique poreuse comportant un certain nombre de pores, la paroi de séparation (4) comprenant une couche côté flux d'entrée de gaz (13) et une couche côté flux de sortie de gaz, une extrémité ouverte et l'autre extrémité ouverte de la pluralité de cellules étant obturées alternativement par des sections d'obturation ;

la couche côté flux d'entrée de gaz de la paroi de séparation comprenant une couche de catalyseur de retrait de substance particulaire (10) qui supporte ou qui est revêtue d'un catalyseur d'oxydation pour favoriser l'oxydation de la substance particulaire contenue dans le gaz d'échappement ; et

la couche côté flux de sortie de gaz (15) de la paroi de séparation comprenant une couche de collecte de substance particulaire (9) qui a une taille de pore moyenne de 1 à 15 μm de manière à collecter la substance particulaire, et une couche de catalyseur de purification de gaz (11) qui supporte ou est revêtue d'un catalyseur de purification de gaz qui favorise l'oxydation du gaz non brûlé,

dans lequel la quantité (g/l) du catalyseur d'oxydation supporté dans la couche de catalyseur de retrait de substance particulaire est supérieure à celle de la couche de catalyseur de purification de gaz d'un facteur de 1,05 à 10, la quantité de métal noble contenu dans la couche de catalyseur de retrait de substance particulaire (10) est inférieure à celle de la couche de catalyseur de purification de gaz (11), et la quantité totale de catalyseur d'oxydation supporté dans la couche de catalyseur de retrait de substance particulaire (10) et la couche de catalyseur de purification de gaz (11) est de 15 à 180 g/l.

2. Filtre supportant un catalyseur selon la revendication 1, dans lequel la quantité de Ce contenue dans la couche de catalyseur de retrait de substance particulaire (10) est supérieure à celle de la couche de catalyseur de purification de gaz (11) d'un facteur de 1,2 à 20.

3. Filtre supportant un catalyseur selon l'une quelconque des revendications 1 et 2, dans lequel la couche de catalyseur de retrait de substance particulaire (10) ne contient pas de métal noble.

4. Filtre supportant un catalyseur selon l'une quelconque des revendications 1 à 3, dans lequel la couche de catalyseur de purification de gaz (11) a une taille de pore moyenne inférieure à celle de la couche de catalyseur de retrait de substance particulaire.

**5.** Filtre supportant un catalyseur selon l'une quelconque des revendications 1 à 4, dans lequel la couche de catalyseur de purification de gaz a une taille de pore moyenne de 1 à 15 $\mu$m.

**6.** Filtre supportant un catalyseur selon l'une quelconque des revendications 1 à 5, dans lequel la couche de catalyseur de retrait de substance particulaire (10) a une taille de pore moyenne de 35 à 80 $\mu$m.

FIG.1

FIG.2

FIG.3

EP 2 105 200 B1

FIG.4

$G_1$

4

13(10)

15(9(11))

FIG.5

(PORE SIZE:LARGE)

(PORE SIZE:LARGE)

G₁

G₁

4a

10

10

10

4

G₂

11

11

G₂

4b

11

(PORE SIZE:SMALL)

(PORE SIZE:SMALL)

FIG.6

43

44

45(49)

AMOUNT OF PM

FIG.7

FIG.8

FIG.9

**EP 2 105 200 B1**

## REFERENCES CITED IN THE DESCRIPTION

**Patent documents cited in the description**

- JP 2002309921 A
- JP 2002519186 T
- US 20040191133 A